# EUROPÄISCHE PATENTSCHRIFT

(11) **EP 2 455 789 B1**
(45) Veröffentlichungstag und Bekanntmachung des Hinweises auf die Patenterteilung: **22.05.2019**
(21) Anmeldenummer: 11188721.2
(22) Anmeldetag: 11.11.2011
(51) Int. Cl.: G11B 33/10, F21V 8/00

(54) **LICHTLEITER, INSBESONDERE ZUM BELEUCHTEN EINES SCHACHTES FÜR EINEN DATENTRÄGER, UND ABSPIELGERÄT MIT EINEM DERARTIGEN LICHTLEITER**
OPTICAL FIBRE, IN PARTICULAR FOR ILLUMINATING A SHAFT FOR A DATA CARRIER AND PLAYBACK DEVICE WITH SUCH AN OPTICAL FIBRE
CONDUCTEUR LUMINEUX, NOTAMMENT POUR L'ÉCLAIRAGE D'UNE CAGE POUR UN SUPPORT DE DONNÉES, ET LECTEUR DOTÉ D'UN TEL CONDUCTEUR LUMINEUX

(30) Priorität: 18.11.2010 DE 102010051826
(43) Veröffentlichungstag der Anmeldung: 23.05.2012
(73) Patentinhaber: Valeo Schalter und Sensoren GmbH, 74321 Bietigheim-Bissingen (DE)
(72) Erfinder: BATHE, Ray, 96528 Grümpen (DE)

(56) Entgegenhaltungen:
- EP-A1- 1 174 659
- WO-A1-95/29551
- WO-A2-2004/042271
- US-A- 5 434 754
- US-A1- 2005 052 589

## Beschreibung

Die Erfindung betrifft einen Lichtleiter, zum Beleuchten eines Schachtes für einen Datenträger. Der Lichtleiter weist einen Einspeisebereich auf, welcher zum Einspeisen von Licht in den Lichtleiter dient. Der Lichtleiter umfasst auch einen länglich ausgeführten Ausbreitungsbereich, in welchem sich das eingespeiste Licht in Ausbreitungsrichtung ausbreiten kann. Die Erfindung betrifft auch ein Abspielgerät - etwa ein Audio- und/oder Videoabspielgerät, welches einen Schacht zum Aufnehmen eines Datenträgers sowie einen derartigen Lichtleiter zum Beleuchten des Schachtes aufweist.

Das Interesse gilt vorliegend also der Beleuchtung eines Schachtes, in welchen Datenträger eingeführt werden können, nämlich beispielsweise eine CD, DVD oder dergleichen. Zu diesem Zwecke sind aus dem Stand der Technik bereits Beleuchtungseinrichtungen bekannt. Beispielsweise offenbart die Druckschrift WO 95/29551 A1 eine Beleuchtungseinrichtung, bei welcher durch ein Leuchtmittel erzeugtes Licht über einen Lichtleiter hin zu einem CD-Schacht geleitet wird. Das aus dem Lichtleiter an seinem Ende austretende Licht beleuchtet dann den Schacht. Insgesamt sind zwei separate Lichtleiter bereitgestellt, welche den Schacht auf der linken Seite sowie auf der rechten Seite beleuchten.

Eine Beleuchtungseinrichtung zum Beleuchten eines CD-Schachtes ist außerdem aus dem Dokument FR 2 938 804 A1 bekannt: Im Gegenstand gemäß dieser Druckschrift wird der CD-Schacht über eine transparente oder aber eine transluzente Innenwand beleuchtet.

Vorliegend richtet sich das Interesse insbesondere auf die Beleuchtung eines Datenträger-Schachtes mithilfe eines Lichtleiters. Es ist eine besondere Herausforderung, einen Datenträger-Schacht bzw. Schlitz zur Aufnahme eines Datenträgers über seine gesamte Länge mit einer homogenen Lichtverteilung beleuchten zu können. Eine Halblösung dieses Problems beschreibt die Druckschrift US 7,581,865 B2. Dieses Dokument offenbart einen Lichtleiter mit zwei zueinander parallel verlaufenden Lichtleiterzweigen, zwischen denen ein Schlitz ausgebildet ist. Über den Schlitz kann eine CD bzw. eine DVD in einen Schacht eingeführt werden. Der Lichtleiter kann hinter einer Frontwand eines Abspielgerätes platziert werden, in welcher ebenfalls ein korrespondierender Schlitz zur Aufnahme der CD ausgebildet ist. Der Lichtleiter weist einen Einspeisebereich auf, nämlich zum Einspeisen von Licht in den Lichtleiter. Das eingespeiste Licht wird im Einspeisebereich geteilt und gelangt in die beiden Lichtleiterzweige. Das Licht reflektiert an den jeweiligen äußeren Wänden der Lichtleiterzweige und fällt auf die jeweiligen inneren, den Schlitz unmittelbar begrenzenden Kanten ein. Der Lichtleiter ist dabei so konzipiert, dass die inneren Kanten der beiden Lichtleiterzweige aufgrund des einfallenden Lichts glühen bzw. leuchten. Zwar wird im Gegenstand gemäß Dokument US 7,581,865 B2 eine homogene Verteilung des Lichts angestrebt, jedoch ergeben sich Probleme bei der Konstruktion der beiden Lichtleiterzweige und somit bei der Ausbreitung des Lichts über die gesamte Länge der Lichtleiterzweige. Folglich kann eine homogene Beleuchtung des Schlitzes nicht gewährleistet werden. Um die Ausbreitungseigenschaften zu verbessern, muss bei dem Lichtleiter ein Träger eingesetzt werden, mittels welchem die Reflexionen des Lichts an den äußeren Wänden der Lichtleiterzweige unterstützt werden.

Es ist Aufgabe der Erfindung, einen gegenüber dem Stand der Technik verbesserten Lichtleiter - zum Beleuchten eines Schachtes für einen Datenträger - zu schaffen, bei welchem insbesondere eine möglichst homogene, zumindest aus einer bestimmten Blickrichtung wahrnehmbare Beleuchtung entlang des Lichtleiters gewährleistet ist.

Diese Aufgabe wird erfindungsgemäß durch einen Lichtleiter mit den Merkmalen gemäß Patentanspruch 1 gelöst, wie auch durch ein Abspielgerät mit den Merkmalen des Patentanspruchs 10. Vorteilhafte Ausführungen der Erfindung sind Gegenstand der abhängigen Patentansprüche und der Beschreibung.

Ein erfindungsgemäßer Lichtleiter dient insbesondere zum Beleuchten eines Schachtes für einen Datenträger. Der Schacht kann beispielsweise ein Schacht eines Abspielgeräts sein, nämlich insbesondere eines Kraftfahrzeugs. Der Lichtleiter kann aber auch zur Beleuchtung anderer Elemente bzw. Bauteile, insbesondere eines Kraftfahrzeugs, dienen, etwa zur Beleuchtung einer Zierleiste oder dergleichen. Er weist einen Einspeisebereich zum Einspeisen von Licht in den Lichtleiter auf, wie auch einen länglich ausgeführten Ausbreitungsbereich, in welchem sich das eingespeiste Licht in Ausbreitungsrichtung ausbreitet. Der Ausbreitungsbereich ist keilförmig, in der Ausbreitungsrichtung verjüngt ausgebildet und weist eine erste Wand sowie eine der ersten Wand gegenüberliegende und in der Ausbreitungsrichtung auf die erste Wand zulaufende zweite Wand auf, sodass Lichtanteile des sich ausbreitenden Lichts an der zweiten Wand reflektieren und durch die erste Wand aus dem Lichtleiter austreten.

Also besteht der Kerngedanke der vorliegenden Erfindung darin, dass der Ausbreitungsbereich eine Keilform aufweist, nämlich derart, dass er in der Ausbreitungsrichtung verjüngt ausgebildet ist. Der Ausbreitungsbereich weist somit zwei Wände auf, nämlich eine erste Wand sowie eine der ersten Wand gegenüberliegende zweite Wand, welche in der Ausbreitungsrichtung auf die erste Wand zuläuft. An der zweiten Wand können Lichtanteile des sich entlang des Ausbreitungsbereichs ausbreitenden Lichts reflektiert werden, um dann durch die erste (gegenüberliegende) Wand aus dem Lichtleiter auszutreten. Durch eine solche Ausgestaltung des Ausbreitungsbereichs des Lichtleiters kann eine homogene, aus einer definierten Blickrichtung wahrnehmbare Beleuchtung der Umgebung des Lichtleiters - zum Beispiel eines Schachtes - ermöglicht werden. Mit nur einem einzigen Leuchtmittel kann somit beispielsweise der gesamte Schlitz bzw. ein CD-Schacht über seinen gesamten Längenbereich homogen beleuchtet werden. Eine solche Ausgestaltung des Ausbreitungsbereichs sorgt auch für eine optisch ansprechende Beleuchtung eines CD- und/oder DVD-Schachtes bzw. eines anderen Datenträger-Schachtes eines Abspielgeräts in einem Kraftfahrzeug: Der Lichtleiter kann beispielsweise an einer oberen Innenwand des Schachtes angebracht sein, welche von den Fahrzeuginsassen nicht einsehbar ist. Dann ist auch der an der oberen Innenwand anliegende Lichtleiter für die Fahrzeuginsassen nicht sichtbar. In diesem Fall wirken die aus dem Lichtleiter austretenden und auf die untere (für die Fahrzeuginsassen einsehbare) Wand des Schachtes einfallenden Lichtanteile für die Fahrzeuginsassen wie ein beleuchteter Wasserfall, dessen Farbgebung der Farbe des Leuchtmittels und/oder des transparenten Lichtleiters entspricht.

Also ist der Lichtleiter bevorzugt so konzipiert, dass er einen Datenträger-Schacht eines Abspielgeräts - insbesondere eines Kraftfahrzeugs - beleuchten kann. Die Erfindung ist jedoch nicht auf einen solchen Datenträger-Schacht begrenzt. Gleichfalls kann der Lichtleiter zur Beleuchtung von anderen Komponenten - insbesondere eines Kraftfahrzeugs - eingesetzt werden, etwa zur Beleuchtung von Zierelementen und dergleichen. Hierbei kann der Lichtleiter beispielsweise direkt an der Oberfläche eines solchen Zierelements angebracht sein.

Prinzipiell kann die zweite Wand glatt ausgebildet sein; sie kann beispielsweise poliert sein. Um jedoch eine stärkere Reflektion an der zweiten Wand zu gewährleisten und somit eine hellere und mehr homogene Beleuchtung des Schachtes oder eines Gegenstandes zu erreichen, kann die zweite Wand eine Reflexionsstruktur aufweisen, an welcher die Lichtanteile reflektiert werden. Die Reflexionsstruktur ist also im Wesentlichen eine Störstruktur, an welcher Lichtanteile des sich ausbreitenden Lichts reflektieren und auf die gegenüberliegende erste Wand unter einem solchen Winkel einfallen, dass sie aus dem Lichtleiter austreten.

Also weist die zweite Wand des Ausbreitungsbereichs eine Reflexionsstruktur auf, an welcher Lichtanteile des sich ausbreitenden Lichts reflektieren können, um aus dem Lichtleiter auszutreten, nämlich über die gegenüberliegende erste Wand. Die Reflektionsstruktur kann beispielsweise durch eine raue Oberfläche gebildet sein. Sie kann aber auch eine Vielzahl von Reflexionsstellen aufweisen, an denen die Lichtanteile reflektieren und welche in der Ausbreitungsrichtung jeweils in vorbestimmten Abständen an der zweiten Wand angeordnet sind. Durch solche Reflexionsstellen wird erreicht, dass die Lichtanteile lediglich an vorbestimmten bzw. gewollten Stellen aus dem Lichtleiter austreten können. Durch entsprechende Auswahl der Abstände zwischen den Reflexionsstellen kann auch die Intensität des austretenden Lichts pro Längeneinheit des Ausbreitungsbereichs beliebig eingestellt werden. Auf diesem Weg gelingt es, den Umgebungsbereich neben dem Lichtleiter mit einer beliebigen Lichtverteilung - beispielsweise homogen - zu beleuchten.

Es hat sich herausgestellt, dass aufgrund der Keilform des Ausbreitungsbereichs die Lichtanteile am Anfang des Ausbreitungsbereichs stärker als am Ende des Ausbreitungsbereichs an der Reflexionsstruktur reflektiert werden. Das Licht wird also an der Reflexionsstruktur mit einer in Ausbreitungsrichtung kleiner werdenden Stärke reflektiert. Es erweist sich somit als besonders vorteilhaft, wenn die Reflexionsstellen an der zweiten Wand mit einer in der Ausbreitungsrichtung größer werdenden Dichte angeordnet sind. Dies bedeutet, dass die Abstände zwischen jeweils zwei benachbarten Reflexionsstellen in der Ausbreitungsrichtung kleiner werden. Hierdurch wird der Umgebungsbereich des Lichtleiters homogen beleuchtet. Zum Beispiel können die Reflexionsstellen an der zweiten Wand mit in der Ausbreitungsrichtung stetig bzw. kontinuierlich kleiner werdenden Abständen zwischen jeweils zwei benachbarten Reflexionsstellen angeordnet sein.

In einer Ausführungsform sind die Reflexionsstellen durch an der zweiten Wand ausgebildete Vorsprünge gebildet. Die Reflexionsstellen können beispielsweise durch dreieckige Nasen und/oder durch Noppen gebildet sein, welche an der zweiten Wand ausgebildet sind bzw. von dieser nach innen hin abstehen. Durch solche Störelemente wird erreicht, dass Lichtanteile des sich ausbreitenden Lichts besonders zuverlässig an der zweiten Wand reflektiert werden und durch die gegenüberliegende erste Wand aus dem Lichtleiter austreten können.

Die an der Reflexionsstruktur reflektierten Lichtanteile fallen auf die gegenüberliegende erste Wand unter einem Winkel ein, welcher in einem Wertebereich von 60° bis 90° liegt, und zwar entgegengesetzt zur Ausbreitungsrichtung. Die Lichtanteile werden also in eine solche Richtung reflektiert, welche eine Richtungskomponente entgegen der Ausbreitungsrichtung des sich im Ausbreitungsbereich ausbreitenden Lichts besitzt. Die Lichtanteile werden also quasi rückreflektiert und treten dann über die gegenüberliegende erste Wand aus dem Lichtleiter aus. Ist nun der Lichtleiter - wie bereits ausgeführt - an einer oberen Wand in einem Datenträger-Schacht in einem Kraftfahrzeug angebracht und erstreckt er sich in Fahrzeugquerrichtung über die gesamte Länge des Schachtes von links nach rechts derart, dass die erste Wand des Ausbreitungsbereichs nach unten orientiert bzw. der unteren Wand des Schachtes zugewandt ist, so treten die Lichtanteile aus dem Lichtleiter je nach Anordnung des Lichtleiters in Fahrzeugquerrichtung nach links oder nach rechts aus. Die Lichtanteile reflektieren dann an der unteren Wand des Schachtes und treten aus dem Schacht entweder nach links oder nach rechts heraus (abhängig von der Orientierung des Ausbreitungsbereichs). Dies bedeutet, dass die Beleuchtung des Schachtes nur für diejenigen Fahrzeuginsassen sichtbar ist bzw. wahrgenommen werden kann, die sich entweder auf der linken oder auf der rechten Seite im Kraftfahrzeug befinden, nämlich abhängig von der Anordnung bzw. der Orientierung des Lichtleiters im Schacht. Ist der Ausbreitungsbereich in Fahrzeugquerrichtung nach rechts verjüngt ausgebildet bzw. verläuft die Ausbreitungsrichtung des Lichts im Ausbreitungsbereich von links nach rechts, so ist der beleuchtete Schacht nur für den Fahrer bzw. aus einer Blickrichtung von links sichtbar, während der Beifahrer einen unbeleuchteten Schacht wahrnimmt. Ist der Lichtleiter im Schacht umgekehrt orientiert, so kann hingegen der Beifahrer die Beleuchtung des Schachtes wahrnehmen, während der Fahrer die Beleuchtung nicht sieht. Um die Wahrnehmung der Beleuchtung sowohl für eine Blickrichtung von links als auch für die Blickrichtung von rechts - insbesondere sowohl für den Fahrer als auch für den Beifahrer - zu gewährleisten, kann der Lichtleiter einen weiteren, zweiten Ausbreitungsbereich aufweisen: Der zweite Ausbreitungsbereich kann ebenfalls länglich ausgeführt sein, und er kann zum Leiten von Licht in einer zur Ausbreitungsrichtung des ersten Ausbreitungsbereichs entgegengesetzten zweiten Ausbreitungsrichtung dienen. Der zweite Ausbreitungsbereich kann ebenfalls keilförmig, in der zweiten Ausbreitungsrichtung verjüngt ausgebildet sein. Er kann eine erste Wand sowie eine der ersten Wand gegenüberliegende und in der zweiten Ausbreitungsrichtung auf die erste Wand zulaufende zweite Wand, insbesondere mit einer Reflexionsstruktur, aufweisen, sodass Lichtanteile eines sich im zweiten Ausbreitungsbereich ausbreitenden Lichts an dieser zweiten Wand, insbesondere an ihrer Reflektionsstruktur, reflektieren und durch die erste Wand des zweiten Ausbreitungsbereichs aus dem Lichtleiter austreten. Diese Ausführungsform sorgt also dafür, dass eine Umgebung des Lichtleiters nicht nur aus einer definierten Blickrichtung, sondern aus mehreren Richtungen als beleuchtet wahrgenommen werden kann. So kann beispielsweise ein Datenträger-Schacht in einem Kraftfahrzeug sowohl aus der Blickrichtung von links als auch aus der Blickrichtung von rechts als beleuchtet wahrgenommen werden.

Vorzugsweise ist der zweite Ausbreitungsbereich in seiner Form und Abmessung dem ersten Ausbreitungsbereich gleich ausgebildet. Dann kann die Umgebung des Lichtleiters - ein Datenträger-Schacht - aus mehreren Richtungen in gleichem Maße als beleuchtet wahrgenommen werden.

Um einen besonders kompakten Lichtleiter zu schaffen, können die beiden Ausbreitungsbereiche über ihre gesamten Längen miteinander einteilig verbunden sein. Diese Ausführungsform hat außerdem den Vorteil, dass die beiden Ausbreitungsbereiche direkt nebeneinander liegen und sich somit keine wesentlichen Unterschiede bei der Wahrnehmung der Beleuchtung aus unterschiedlichen Blickrichtungen ergeben.

Bevorzugt liegen die ersten Wände - durch diese ersten Wände treten die reflektierten Lichtanteile aus dem Lichtleiter heraus - der beiden Ausbreitungsbereiche in einer gemeinsamen Ebene. Ergänzend oder alternativ können die zweiten Wände - insbesondere mit den jeweiligen Reflexionsstrukturen - mit gegenläufigen Gefällen aneinander vorbeigeführt sein. Mit anderen Worten sind die zweiten Wände bei dieser Ausführungsform X-förmig nebeneinander bzw. aneinander vorbeigeführt. Die zweiten Wände können sich also kreuzen.

Der Lichtleiter weist bevorzugt auch einen zweiten Einspeisebereich auf, welcher zum Einspeisen von Licht in den zweiten Ausbreitungsbereich dient. Die beiden Einspeisebereiche können derart ausgebildet sein, dass sie durch separate Leuchtmittel gespeist werden können. Alternativ können die Einspeisebereiche jedoch auch mithilfe eines gemeinsamen Leuchtmittels gespeist werden.

Die Erfindung betrifft außerdem ein Abspielgerät, insbesondere für ein Kraftfahrzeug. Das Abspielgerät kann ein Audio- und/oder Video-Abspielgerät sein. Es umfasst einen Schacht zum Aufnehmen eines Datenträgers sowie einen erfindungsgemäßen Lichtleiter zum Beleuchten des Schachtes. Der Schacht kann zum Beispiel zur Aufnahme einer CD und/oder einer DVD ausgebildet sein. Bevorzugt ist der Lichtleiter an einer oberen Innenwand des Schachtes angebracht, nämlich insbesondere derart, dass sich der Ausbreitungsbereich über eine überwiegende Länge - insbesondere die gesamte Länge - des Schachtes entlang eines Schlitzes bzw. parallel zum Schlitz erstreckt, durch welchen der Datenträger in den Schacht aufgenommen werden kann. Der Lichtleiter ist an der Innenwand des Schachtes vorzugsweise derart angebracht, dass die erste Wand des Lichtleiters, durch welche die Lichtanteile aus dem Lichtleiter austreten, dem Schacht zugewandt ist.

Die mit Bezug auf den erfindungsgemäßen Lichtleiter vorgestellten bevorzugten Ausführungsformen und deren Vorteile gelten entsprechend für das erfindungsgemäße Abspielgerät.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Dabei zeigen:
- Fig. 1 bis Fig. 4: in schematischer und perspektivischer Darstellung einen Lichtleiter gemäß einer Ausführungsform der vorliegenden Erfindung;
- Fig. 5: in schematischer Darstellung eine Seitenansicht des Lichtleiters gemäß den Fig. 1 bis 4 mit aufgetragenen Austrittsrichtungen von aus dem Lichtleiter austretenden Lichtanteilen;
- Fig. 6: in schematischer Darstellung eine Stirnseite eines Abspielgeräts gemäß einer Ausführungsform der Erfindung, welches einen Lichtleiter gemäß den Fig. 1 bis 5 aufweist; und
- Fig. 7: in schematischer Darstellung eine Draufsicht auf das Abspielgerät gemäß Fig. 6.

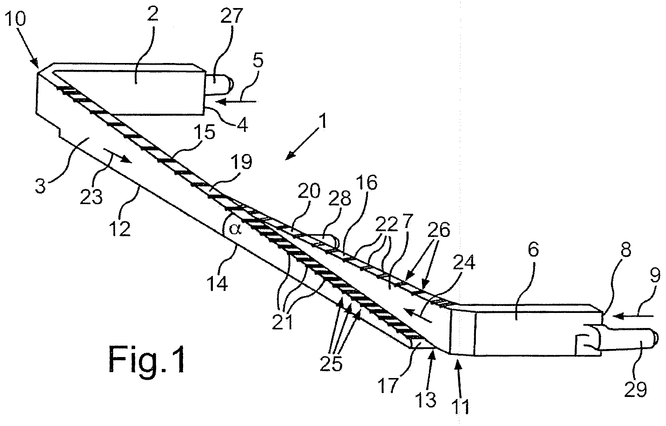

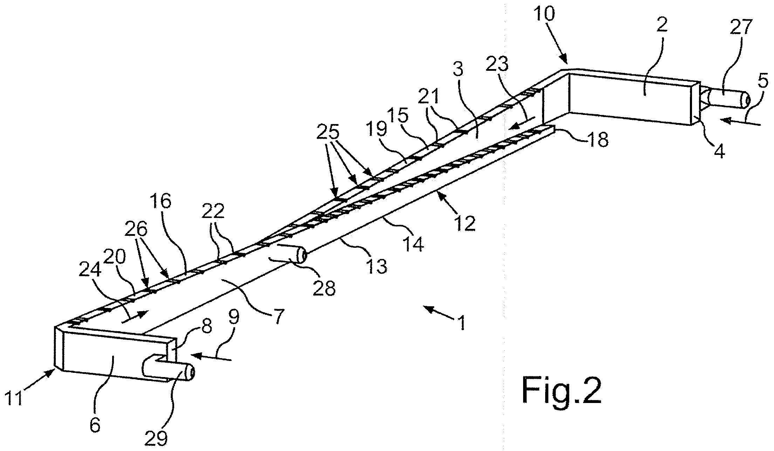

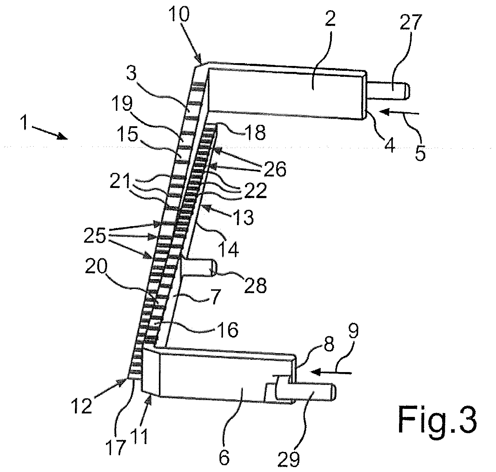

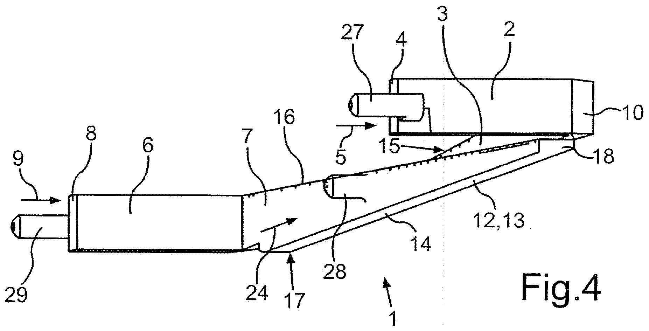

Die Fig. 1 bis 4 zeigen in jeweils einer unterschiedlichen perspektivischen Darstellung einen Lichtleiter 1 gemäß einer Ausführungsform der Erfindung. Der Lichtleiter 1 dient zum Beleuchten verschiedenster Gegenstände, wie etwa eines Schachtes zur Aufnahme eines Datenträgers in einem Kraftfahrzeug. Der Lichtleiter 1 kann aber auch zur Beleuchtung von anderen Elementen dienen, wie beispielsweise von Zierelleisten und dergleichen.

Der Lichtleiter 1 ist einteilig ausgebildet. Er ist vollständig aus einem lichtdurchlässigen bzw. transparenten Material bereitgestellt.

Der Lichtleiter 1 weist einen ersten Einspeisebereich 2 bzw. einen Einspeiseabschnitt auf. Der Einspeisebereich 2 ist im Wesentlichen quaderförmig ausgebildet und dient zum Einspeisen von Licht in den Lichtleiter 1, und genauer gesagt in einen mit dem ersten Einspeisebereich 2 gekoppelten ersten Ausbreitungsbereich 3. Das Licht wird von einer Stirnseite 4 des ersten Einspeisebereichs 2 eingespeist, nämlich gemäß der Pfeildarstellung 5. Der Lichtleiter 1 weist außerdem einen zweiten Einspeisebereich 6 auf, welcher ebenfalls zur Einspeisung von Licht in den Lichtleiter 1 dient, nämlich in einen zweiten Ausbreitungsbereich 7, welcher mit dem zweiten Einspeisebereich 6 zur Ausbreitung des Lichts gekoppelt ist. Das Licht wird hier ebenfalls von einer Stirnseite 8 des zweiten Einspeisebereichs 6 eingespeist, nämlich gemäß der Pfeildarstellung 9. Der zweite Einspeisebereich 6 ist prinzipiell gleich wie der erste ausgebildet und erstreckt sich parallel zum ersten Einspeisebereich 2, nämlich auf der gegenüberliegenden Seite des Lichtleiters 1.

Die beiden Einspeisebereiche 2, 6 schließen mit den jeweiligen Ausbreitungsbereichen 3, 7 einen rechten Winkel ein, wobei Eckbereiche 10, 11 abgeflacht sind, an welchen das Licht von den Einspeisebereichen 2, 6 reflektiert und in die jeweiligen Ausbreitungsbereiche 3, 7 eingespeist wird.

Die beiden Ausbreitungsbereiche 3, 7 sind gleich ausgebildet; das heißt, sie weisen die gleiche geometrische Form sowie die gleichen Abmessungen auf. Die Ausbreitungsbereiche 3, 7 weisen jeweils eine erste Wand 12, 13 auf, welche in einer gemeinsamen Ebene liegen und somit eine gemeinsame Wand 12, 13 bilden. Die Ausbreitungsbereiche 3, 7 liegen unmittelbar nebeneinander bzw. sind einstückig miteinander verbunden. Die ersten Wände 12, 13 bilden eine gemeinsame Lichtaustrittsfläche 14, durch welche Lichtanteile des sich ausbreitenden Lichts austreten können.

Die Ausbreitungsbereiche 3, 7 weisen außerdem jeweils eine zweite Wand 15, 16 auf, welche gegenüber der jeweiligen ersten Wand 12, 13 liegt. Die Ausbreitungsbereiche 3, 7 sind dabei keilförmig ausgebildet, sodass die zweiten Wände 15, 16 auf die jeweiligen ersten Wände 12, 13 zulaufen, nämlich unter einem Winkel a, der abhängig von der Anwendung in einem Wertebereich von 1° bis 20° liegen kann. Die erste und die zweite Wand 12, 15 des ersten Ausbreitungsbereichs 3 sind an einem Punkt bzw. an einem Ende 17 zusammengeführt, während die erste und die zweite Wand 13, 16 des zweiten Ausbreitungsbereichs 7 an einem gemeinsamen Punkt bzw. einem Ende 18 zusammengeführt sind. Die zweiten Wände 15, 16 bilden jeweilige Gefälle 19, 20 der Ausbreitungsbereiche 3, 7. Die Ausbreitungsbereiche 3, 7 sind dabei über ihre gesamten Längen derart miteinander verbunden, dass die zweiten Wände 15, 16 mit ihren gegenläufigen Gefällen 19, 20 aneinander vorbeigeführt sind. Mit anderen Worten sind die zweiten Wände 15, 16 der beiden Ausbreitungsbereiche 3, 7 X-förmig nebeneinander bzw. aneinander vorbeigeführt. Man könnte sagen, dass sich die beiden zweiten Wände 15, 16 der Ausbreitungsbereiche 3, 7 kreuzen. Also sind die Ausbreitungsbereiche 3, 7 bezüglich einander gegenläufig angeordnet.

Prinzipiell können die zweiten Wände 15, 16 glatt sein, nämlich beispielsweise poliert. Es hat sich jedoch im Hinblick auf eine homogene und helle Beleuchtung als vorteilhaft erwiesen, wenn an den zweiten Wänden 15, 16 jeweils eine Reflexionsstruktur 21, 22 ausgebildet ist. Je nach Anwendungsbereich des Lichtleiters 1 können somit die zweiten Wände 15, 16 unterschiedlich ausgebildet sein; es können nämlich die Reflektionsstrukturen 21, 22 bereitgestellt sein oder die zweiten Wände 15, 16 können glatt sein. Breitet sich nun das Licht im ersten Ausbreitungsbereich 3 in einer ersten Ausbreitungsrichtung 23 aus, so werden an der ersten Reflexionsstruktur 21 Lichtanteile des sich im ersten Ausbreitungsbereich 3 ausbreitenden Lichts reflektiert. Diese reflektierten Lichtanteile treten dann aus dem Lichtleiter 1 bzw. dem ersten Ausbreitungsbereich 3 heraus, nämlich über die gegenüberliegende erste Wand 12 des ersten Ausbreitungsbereichs 3. Dies gilt entsprechend auch für den zweiten Ausbreitungsbereich 7: Breitet sich dort das Licht in einer zweiten Ausbreitungsrichtung 24 aus, so werden Lichtanteile des Lichts an der zweiten Reflexionsstruktur 22 reflektiert. Diese Lichtanteile treten dann durch die erste Wand 13 des zweiten Ausbreitungsbereichs 7 aus dem Lichtleiter 1 heraus. Die erste und die zweite Ausbreitungsrichtung 23, 24 sind dabei entgegengesetzte Richtungen.

Die Reflexionsstrukturen 21, 22 sind also Störstrukturen, welche Lichtanteile des sich ausbreitenden Lichts aus dem Lichtleiter 1 auskoppeln. Die Reflexionsstrukturen 21, 22 weisen jeweils eine Vielzahl von Reflexionsstellen 25, 26 auf, welche an der jeweiligen zweiten Wand 15, 16 in der jeweiligen Ausbreitungsrichtung 23, 24 verteilt angeordnet sind. Diese Reflexionsstellen 25, 26 können durch dreieckige Vorsprünge (Prismen) und/oder durch viele kleine punktförmige Halbkugeln und/oder durch andere kleine Geometrien, wie z. B. Pyramiden, Ringe, Kegelspitzen, Kegelstümpfe und dergleichen, gebildet werden, welche von der jeweiligen zweiten Wand 15, 16 nach innen hin abstehen, also in den Lichtleiter 1 hineinragen. Also sind die Reflexionsstellen 25, 26 durch Vorsprünge bzw. Nasen oder Noppen gebildet, welche sich über die gesamte Breite der jeweiligen zweiten Wand 15, 16 erstrecken. Die Reflexionsstellen 25, 26 sind in der jeweiligen Ausbreitungsrichtung 23, 24 mit immer größer werdender Dichte angeordnet. Dies bedeutet, dass in der jeweiligen Ausbreitungsrichtung 23, 24 die Abstände zwischen jeweils zwei benachbarten Reflexionsstellen 25, 26 kleiner werden. Auf diesem Weg gelingt es, über die gesamte Länge der Ausbreitungsbereiche 3, 7 eine homogene Verteilung des ausgekoppelten Lichts zu erreichen.

Wie bereits ausgeführt, kann der Lichtleiter 1 beispielsweise zur Beleuchtung eines Schachtes eines Abspielgeräts dienen. Zur Befestigung an einer Innenwand eines Schachtes weist der Lichtleiter 1 außerdem Befestigungselemente 27, 28, 29 auf. Mittels der Befestigungselemente 27, 28, 29 kann der Lichtleiter 1 also beispielsweise an einer Innenwand eines Schachtes zur Aufnahme eines Datenträgers befestigt werden. Die Befestigungselemente 27 und 29 dienen außerdem zur genauen Positionierung der Einspeisebereiche 2, 6 über den Lichtquellen auf einer Leiterplatte.

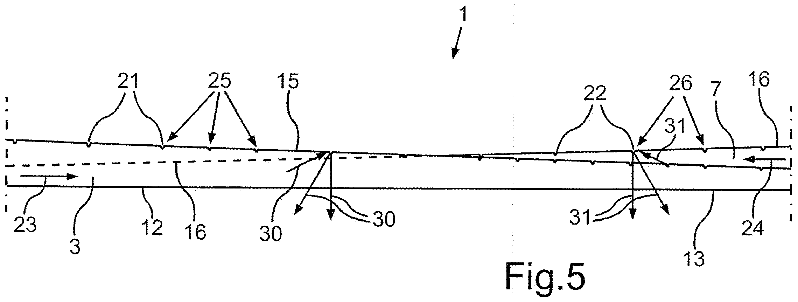

In Fig. 5 ist eine Seitenansicht eines Längsausschnitts des Lichtleiters 1 gezeigt. Und zwar ist in Fig. 5 eine Seitenansicht des ersten Ausbreitungsbereichs 3 gezeigt, wie auch eines Teils des zweiten Ausbreitungsbereichs 7. Aus Fig. 5 geht nun hervor, dass die zweiten Wände 15, 16 der Ausbreitungsbereiche 3, 7 X-förmig aneinander geführt sind bzw. sich kreuzen.

In den Ausbreitungsbereichen 3, 7 kann sich das Licht in der jeweiligen Ausbreitungsrichtung 23, 24 ausbreiten. Während der Ausbreitung findet an den ersten Wänden 12, 13 die Totalreflexion statt, wohingegen an den Reflexionsstrukturen 21, 22 das Licht teilweise unter einem größeren Winkel reflektiert wird. Das sich in der ersten Ausbreitungsrichtung 23 im ersten Ausbreitungsbereich 3 ausbreitende Licht bzw. seine Anteile 30 fallen auf die Reflexionsstellen 25 ein und werden dort reflektiert. Die reflektierten Lichtanteile 30 fallen dann auf die erste Wand 12 unter einem relativ großen Winkel ein und werden somit über die erste Wand 12 aus dem ersten Ausbreitungsbereich 3 ausgekoppelt. Wie aus Fig. 5 hervorgeht, treten die reflektierten Lichtanteile 30 aus dem Lichtleiter 1 in eine Richtung aus, welche keine Richtungskomponente in Richtung der Ausbreitungsrichtung 23 aufweist. Die Lichtanteile 30 werden im Wesentlichen in eine Richtung ausgekoppelt, welche eine Richtungskomponente entgegen der Ausbreitungsrichtung 23 aufweist. Mit anderen Worten werden die Lichtanteile 30 also entgegen der Ausbreitungsrichtung 23 schräg zur ersten Wand 12 ausgekoppelt. Würde der Lichtleiter 1 nun lediglich den ersten Ausbreitungsbereich 3 aufweisen und ohne den zweiten Ausbreitungsbereich 7 auskommen, so wären die Lichtanteile 30 und somit die Beleuchtung lediglich aus einer bestimmten Blickrichtung sichtbar. Eine solche Ausbildung des Lichtleiters 1 könnte für einige Anwendungen denkbar sein. Für die Anwendung in einem Datenträger-Schacht in einem Kraftfahrzeug erweist es sich jedoch als besonders vorteilhaft, wenn beide Ausbreitungsbereiche 3, 7 vorhanden sind. Das sich im zweiten Ausbreitungsbereich 7 ausbreitende Licht bzw. seine Anteile 31 werden nämlich ebenfalls an den Reflexionsstellen 26 reflektiert und treten dann über die erste Wand 13 des zweiten Ausbreitungsbereichs 7 aus diesem heraus. Diese Lichtanteile 31 werden ebenfalls in eine Richtung ausgekoppelt, welche lediglich Richtungskomponenten entgegen der zweiten Ausbreitungsrichtung 24 aufweist. Durch das Vorhandensein der beiden gegenläufig angeordneten Ausbreitungsbereiche 3, 7 kann somit eine nicht nur homogene Beleuchtung der Umgebung des Lichtleiters 1 gewährleistet werden, sondern auch eine aus jeder Richtung wahrnehmbare Beleuchtung.

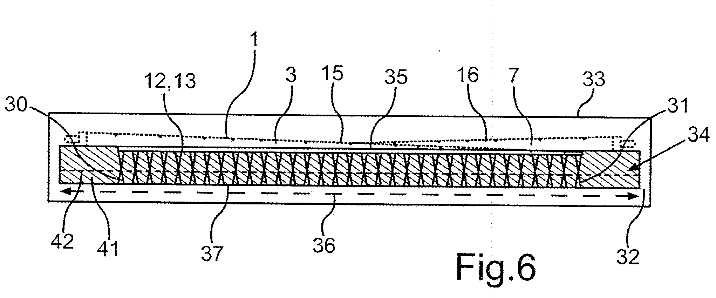

In Fig. 6 ist eine Stirnseite 32 eines Audio- und/oder Videoabspielgeräts 33 gemäß einer Ausführungsform der Erfindung dargestellt. Das Abspielgerät 33 kann in einem Kraftfahrzeug - etwa an der Mittelkonsole - eingesetzt werden. Im Abspielgerät 33 ist ein Schacht 34 ausgebildet, in welchen ein Datenträger eingeführt werden kann, etwa eine CD bzw. eine DVD. An einer den Schacht 34 begrenzenden oberen Innenwand 35 ist der Lichtleiter 1 angebracht, wie er in den Fig. 1 bis 5 abgebildet ist. Der Lichtleiter 1 bzw. seine Ausbreitungsbereiche 3, 7 erstrecken sich fast über die gesamte Länge 36 des Schachtes 34, nämlich von links nach rechts (in Fahrzeugquerrichtung). Der genannte Datenträger kann dabei von der Stirnseite 32 in den Schacht 34 eingeführt werden, nämlich über einen Schlitz. Die Stirnseite 32 ist also der Bedienperson bzw. dem Innenraum des Kraftfahrzeugs zugewandt.

Der Lichtleiter 1 ist an der oberen Wand 35 ein wenig - um etwa 5 mm - versetzt zur Stirnwand 32 angeordnet, nämlich in Richtung nach innen hin, also in Einführrichtung des Datenträgers. Der in Fig. 6 gestrichelt dargestellte Lichtleiter 1 ist in die obere Wand 35 derart integriert, dass er quasi einen Teil der oberen Wand 35 bildet. Der Lichtleiter 1 ist somit für einen Beobachter, der das Abspielgerät 33 von der Stirnseite betrachtet, nicht zu sehen. Die ersten Wände 12, 13 der Ausbreitungsbereiche 3, 7 können nämlich flächenbündig bezüglich der oberen Innenwand 35 angeordnet sein oder sie können nur ein wenig in den Schacht 34 hinein ragen.

Die ersten Wände 12, 13 sind außerdem dem Schacht 34 bzw. seiner unteren Wand 37 zugewandt, während die zweiten Wände 15, 16 vom Schacht abgewandt sind. Dies bedeutet, dass die aus dem Lichtleiter 1 austretenden Lichtanteile 30, 31 direkt in den Schacht 34 gelangen.

Es kann in dem Schacht 34 auch ein aus einem Filzgewebe ausgebildetes Schutzelement 41 bereitgestellt sein, das sich über die gesamte Länge 36 des Schachtes 34 zwischen seiner Unterseite und der oberen Innenwand 35 erstreckt, etwa senkrecht zur Einführrichtung des Datenträgers. Dieses Schutzelement 41 ist vorzugsweise in Einführrichtung hinter dem Lichtleiter 1 angeordnet und kann das gesamte hintere Ende des Schachtes 34 abdecken bzw. abschließen; es kann einen hinteren Abschluss des Schachtes 34 bilden. Das Schutzelement 41 weist einen in Längsrichtung ausgebildeten Schnitt bzw. Schlitz 42 auf, durch welchen der Datenträger hindurch bewegt werden kann. Der Tatenträger wird dabei sowohl an seiner Ober- als auch an seiner Unterseite durch das Schutzelement 41 berührt. Das Schutzelement 41 hat daher die Funktion des Schutzes des Inneren des Abspielgerätes 32 vor Staub und anderen Verunreinigungen.

Der Abstand zwischen dem Lichtleiter 1 und dem Schutzelement 41 kann in Einführrichtung zum Beispiel 3 mm betragen. Trotzt seiner Anordnung hinter dem Lichtleiter 1 kann auch das Schutzelement 41 teilweise durch das Licht beleuchtet werden, so dass das gesamte Schutzelement 41 schwach leuchtet.

Die aus dem ersten Ausbreitungsbereich 3 austretenden Lichtanteile 30 sowie die aus dem zweiten Ausbreitungsbereich 7 ausgekoppelten Lichtanteile 32 fallen jedoch im Wesentlichen auf die untere Innenwand 37 ein und treten aus dem Schacht 34 heraus, nämlich nach links einerseits sowie nach rechts andererseits. Für einen Beobachter wirkt die Beleuchtung des Schachtes 34 wie ein beleuchteter Wasserfall, dessen Farbgebung beispielsweise orange sein kann. Ist das Abspielgerät 33 in einem Kraftfahrzeug an der Mittelkonsole angeordnet, so kann der Fahrer die Lichtanteile 30 des ersten Ausbreitungsbereichs 3 wahrnehmen, während der Beifahrer die nach rechts ausgekoppelten Lichtanteile 31 des zweiten Ausbreitungsbereichs 7 wahrnimmt.

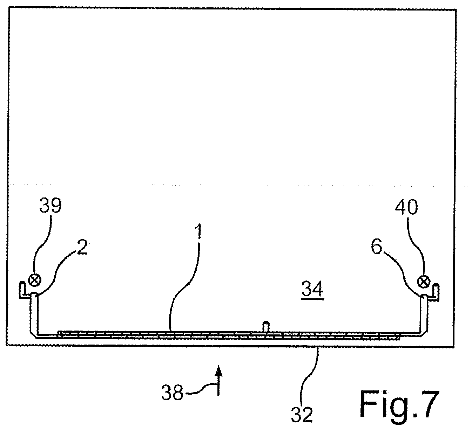

In Fig. 7 ist eine Draufsicht auf den Schacht 34 dargestellt, in welchen der Datenträger von der Stirnseite 32 eingeführt werden kann, und zwar gemäß der Pfeildarstellung 38. Wie aus Fig. 7 hervorgeht, weisen die Einspeisebereiche 2, 6 des Lichtleiters 1 in Richtung nach innen hin bzw. von der Stirnseite 32 weg. Der Lichtleiter 1 wird mithilfe von lediglich zwei Leuchtmitteln 39, 40 gespeist. Mit dem ersten Leuchtmittel 39 wird dabei der erste Ausbreitungsbereich 3 gespeist, während mit dem zweiten Leuchtmittel 49 der zweite Ausbreitungsbereich 7 gespeist wird. Es ist jedoch auch möglich, die beiden Ausbreitungsbereiche mit lediglich einem gemeinsamen Leuchtmittel zu speisen; in diesem Falle könnten die Einspeisebereiche 2, 6 an dem gemeinsamen Leuchtmittel zusammengeführt sein.

## Patentansprüche

1. Abspielgerät (33) mit einem Schacht (34) zum Aufnehmen eines Datenträgers und mit einem Lichtleiter (1) zum Beleuchten des Schachtes (34) mit einem Einspeisebereich (2, 6) zum Einspeisen von Licht in den Lichtleiter (1) und mit einem länglich ausgeführten Ausbreitungsbereich (3, 7), in welchem sich das eingespeiste Licht in Ausbreitungsrichtung (23, 24) ausbreitet,
**dadurch gekennzeichnet, dass**
der Ausbreitungsbereich (3, 7) keilförmig, in der Ausbreitungsrichtung (23, 24) verjüngt ausgebildet ist und eine erste Wand (12, 13) sowie eine der ersten Wand (12, 13) gegenüberliegende und in der Ausbreitungsrichtung (23, 24) auf die erste Wand (12, 13) zulaufende zweite Wand (15, 16) aufweist, so dass Lichtanteile (30, 31) des sich ausbreitenden Lichts an der zweiten Wand (15, 16) reflektieren und durch die erste Wand (12, 13) aus dem Lichtleiter (1) austreten.

2. Abspielgerät (33) nach Anspruch 1,
**dadurch gekennzeichnet, dass**
die zweite Wand (15, 16) eine Reflektionsstruktur (21, 22) aufweist, an welcher die Lichtanteile (30, 31) reflektieren, um durch die erste Wand (12, 13) aus dem Lichtleiter (1) auszutreten.

3. Abspielgerät (33) nach Anspruch 2,
**dadurch gekennzeichnet, dass**
die Reflektionsstruktur (21, 22) eine Vielzahl von Reflektionsstellen (25, 26) aufweist, an denen die Lichtanteile (30, 31) reflektieren und welche in der Ausbreitungsrichtung (23, 24) jeweils in vorbestimmten Abständen an der zweiten Wand (15, 16) angeordnet sind.

4. Abspielgerät (33) nach Anspruch 3,
**dadurch gekennzeichnet, dass**
die Reflektionsstellen (25, 26) an der zweiten Wand (15, 16) mit in der Ausbreitungsrichtung (23, 24) kleiner werdenden Abständen zwischen jeweils zwei benachbarten Reflektionsstellen (25, 26) angeordnet sind.

5. Abspielgerät (33) nach Anspruch 3 oder 4,
**dadurch gekennzeichnet, dass**
die Reflektionsstellen (25, 26) durch an der zweiten Wand (15, 16) ausgebildete Vorsprünge gebildet sind.

6. Abspielgerät (33) nach einem der vorhergehenden Ansprüche,
**dadurch gekennzeichnet, dass**
der Lichtleiter (1) einen länglich ausgeführten zweiten Ausbreitungsbereich (3, 7) zum Leiten von Licht in einer zur Ausbreitungsrichtung (23, 24) des ersten Ausbreitungsbereichs (3, 7) entgegengesetzten zweiten Ausbreitungsrichtung (23, 24) umfasst, wobei der zweite Ausbreitungsbereich (3, 7) ebenfalls keilförmig, in der zweiten Ausbreitungsrichtung (23, 24) verjüngt ausgebildet ist und eine erste Wand (12, 13) sowie eine der ersten Wand (12, 13) gegenüberliegende und in der zweiten Ausbreitungsrichtung (23, 24) auf die erste Wand (12, 13) zulaufende zweite Wand (15, 16), insbesondere mit einer Reflektionsstruktur (21, 22), aufweist, so dass Lichtanteile (30, 31) eines sich in dem zweiten Ausbreitungsbereich (3, 7) ausbreitenden Lichts an dieser zweiten Wand (15, 16), insbesondere an ihrer Reflektionsstruktur (21, 22), reflektieren und durch die erste Wand (12, 13) des zweiten Ausbreitungsbereichs (3, 7) aus dem Lichtleiter (1) austreten.

7. Abspielgerät (33) nach Anspruch 6,
**dadurch gekennzeichnet, dass**
der zweite Ausbreitungsbereich (3, 7) in seiner Form und Abmessung gleich dem ersten Ausbreitungsbereich (3, 7) ausgebildet ist.

8. Abspielgerät (33) nach Anspruch 6 oder 7,
**dadurch gekennzeichnet, dass**
die beiden Ausbreitungsbereiche (3, 7) über ihre gesamten Längen miteinander einteilig verbunden sind.

9. Abspielgerät (33) nach einem der Ansprüche 6 bis 8,
**dadurch gekennzeichnet, dass**
die ersten Wände (12, 13) der beiden Ausbreitungsbereiche (3, 7) in einer gemeinsamen Ebene liegen und/oder die zweiten Wände (15, 16) mit gegenläufigen Gefällen (19, 20) aneinander vorbeigeführt sind.

10. Abspielgerät (33) nach einem der Ansprüche 6 bis 9,
**dadurch gekennzeichnet, dass**
der Lichtleiter (1) einen zweiten Einspeisebereich (2, 6) zum Einspeisen von Licht in den zweiten Ausbreitungsbereich (3, 7) aufweist.

## Claims

1. Playback device (33) having a shaft (34) for receiving a data carrier and having an optical waveguide (1) for illuminating the shaft (34) having a feed-in region (2, 6) for feeding light into the optical waveguide (1) and having an elongate propagation region (3, 7), in which the fed-in light propagates in the propagation direction (23, 24), **characterized in that** the propagation region (3, 7) is embodied to be wedge-shaped, tapering in the propagation direction (23, 24), and has a first wall (12, 13) and a second wall (15, 16), which lies opposite the first wall (12, 13) and extends towards the first wall (12, 13) in the propagation direction (23, 24), with the result that light portions (30, 31) of the propagating light reflect at the second wall (15, 16) and exit the optical waveguide (1) through the first wall (12, 13).

2. Playback device (33) according to Claim 1, **characterized in that** the second wall (15, 16) has a reflection structure (21, 22) at which the light portions (30, 31) reflect so as to exit the optical waveguide (1) through the first wall (12, 13).

3. Playback device (33) according to Claim 2, **characterized in that** the reflection structure (21, 22) has a multiplicity of reflection locations (25, 26) at which the light portions (30, 31) reflect and which are arranged in the propagation direction (23, 24) in each case at predetermined distances on the second wall (15, 16).

4. Playback device (33) according to Claim 3, **characterized in that** the reflection locations (25, 26) on the second wall (15, 16) are arranged such that distances between in each case two adjacent reflection locations (25, 26) become smaller in the propagation direction (23, 24).

5. Playback device (33) according to Claim 3 or 4, **characterized in that** the reflection locations (25, 26) are formed by projections formed on the second wall (15, 16).

6. Playback device (33) according to one of the preceding claims, **characterized in that** the optical waveguide (1) comprises an elongate second propagation region (3, 7) for guiding light in a second propagation direction (23, 24), which is opposite the propagation direction (23, 24) of the first propagation region (3, 7), wherein the second propagation region (3, 7) is likewise embodied to be wedge-shaped, tapering in the second propagation direction (23, 24), and has a first wall (12, 13) and a second wall (15, 16), in particular having a reflection structure (21, 22), which second wall lies opposite the first wall (12, 13) and extends towards the first wall (12, 13) in the second propagation direction (23, 24), with the result that light portions (30, 31) of light propagating in the second propagation region (3, 7) reflect at said second wall (15, 16), in particular at the reflection structure (21, 22) thereof, and exit the optical waveguide (1) through the first wall (12, 13) of the second propagation region (3, 7).

7. Playback device (33) according to Claim 6, **characterized in that** the second propagation region (3, 7) is embodied to be the same as the first propagation region (3, 7) in terms of its shape and dimension.

8. Playback device (33) according to Claim 6 or 7, **characterized in that** the two propagation regions (3, 7) are connected in one piece over their entire lengths.

9. Playback device (33) according to one of Claims 6 to 8, **characterized in that** the first walls (12, 13) of the two propagation regions (3, 7) lie in a common plane and/or the second walls (15, 16) extend past one another with slopes (19, 20) that descend in opposite directions.

10. Playback device (33) according to one of Claims 6 to 9, **characterized in that** the optical waveguide (1) has a second feed-in region (2, 6) for feeding light into the second propagation region (3, 7).

## Revendications

1. Appareil de lecture (33) comprenant un compartiment (34) destiné à accueillir un support de données et comprenant un conducteur optique (1) destiné à éclairer le compartiment (34), doté d'une zone d'injection (2, 6) servant à injecter de la lumière dans le conducteur optique (1) et doté d'une zone de propagation (3, 7) d'exécution allongée, dans laquelle la lumière injectée se propage dans une direction de propagation (23, 24),
**caractérisé en ce que**
la zone de propagation (3, 7) est de configuration cunéiforme, se rétrécissant dans la direction de propagation (23, 24) et possède une première paroi (12, 13) ainsi qu'une deuxième paroi (15, 16) se trouvant à l'opposé de la première paroi (12, 13) et convergeant vers la première paroi (12, 13) dans la direction de propagation (23, 24), de sorte que les parts de lumière (30, 31) de la lumière qui se propage soient réfléchies sur la première paroi (12, 13) et sortent du conducteur optique (1) à travers la deuxième paroi (15, 16).

2. Appareil de lecture (33) selon la revendication 1, **caractérisé en ce que** la deuxième paroi (15, 16) possède une structure de réflexion (21, 22) au niveau de laquelle se réfléchissent les parts de lumière (30, 31) afin de sortie du conducteur optique (1) à travers la première paroi (12, 13).

3. Appareil de lecture (33) selon la revendication 2, **caractérisé en ce que** la structure de réflexion (21, 22) possède une pluralité de points de réflexion (25, 26) au niveau desquels se réfléchissent les parts de lumière (30, 31) et lesquels sont disposés sur la deuxième paroi (15, 16) respectivement à des écarts prédéfinis dans la direction de propagation (23, 24).

4. Appareil de lecture (33) selon la revendication 3, **caractérisé en ce que** les points de réflexion (25, 26) sont disposés sur la deuxième paroi (15, 16) avec des écarts entre deux points de réflexion (25, 26) voisins respectifs qui diminuent dans la direction de propagation (23, 24).

5. Appareil de lecture (33) selon la revendication 3 ou 4, **caractérisé en ce que** les points de réflexion (25, 26) sont formés par des parties saillantes configurées sur la deuxième paroi (15, 16).

6. Appareil de lecture (33) selon l'une des revendications précédentes, **caractérisé en ce que** le conducteur optique (1) comporte une deuxième zone de propagation (3, 7) d'exécution allongée destinée à conduire de la lumière dans une deuxième direction de propagation (23, 24) inverse de la direction de propagation (23, 24) de la première zone de propagation (3, 7), la deuxième zone de propagation (3, 7) étant également de configuration cunéiforme, se rétrécissant dans la deuxième direction de propagation (23, 24) et possédant une première paroi (12, 13) ainsi qu'une deuxième paroi (15, 16) se trouvant à l'opposé de la première paroi (12, 13) et convergeant vers la première paroi (12, 13) dans la deuxième direction de propagation (23, 24), comprenant notamment une structure de réflexion (21, 22), de sorte que les parts de lumière (30, 31) d'une lumière qui se propage dans la deuxième direction de propagation (23, 24) soient réfléchies sur cette première paroi (12, 13), notamment au niveau de sa structure de réflexion (21, 22), et sortent du conducteur optique (1) à travers la première paroi (12, 13) de la deuxième zone de propagation (3, 7).

7. Appareil de lecture (33) selon la revendication 6, **caractérisé en ce que** la deuxième zone de propagation (3, 7) est, dans sa forme et ses dimensions, configurée à l'identique de la première zone de propagation (3, 7).

8. Appareil de lecture (33) selon la revendication 6 ou 7, **caractérisé en ce que** les deux zones de propagation (3, 7) sont reliées d'un seul tenant sur toute leur longueur.

9. Appareil de lecture (33) selon l'une des revendications 6 à 8, **caractérisé en ce que** les premières parois (12, 13) des deux zones de propagation (3, 7) se trouvent dans un plan commun et/ou les deuxièmes parois (15, 16) passent l'une contre l'autre avec des pentes opposées (19, 20).

10. Appareil de lecture (33) selon l'une des revendications 6 à 9, **caractérisé en ce que** le conducteur de lumière (1) possède une deuxième zone d'injection (2, 6) destinée à l'injection de la lumière dans la deuxième zone de propagation (3, 7).
